# EUROPÄISCHE PATENTSCHRIFT

(11) **EP 1 099 059 B1**
(45) Veröffentlichungstag und Bekanntmachung des Hinweises auf die Patenterteilung: **02.10.2002**
(21) Anmeldenummer: 99940019.5
(22) Anmeldetag: 16.07.1999
(51) Int. Cl.: F16C 13/00

(54) **WALZEN UND VERFAHREN ZUR HERSTELLUNG DERSELBEN**
ROLLERS AND METHOD FOR THE PRODUCTION THEREOF
ROULEAUX ET PROCEDE DE PRODUCTION DE CES ROULEAUX

(30) Priorität: 18.07.1998 DE 19832452
(43) Veröffentlichungstag der Anmeldung: 16.05.2001
(73) Patentinhaber: FELIX BÖTTCHER GmbH & Co., D-50933 Köln (DE)
(72) Erfinder: PICKELMANN, Günter, Norbert, D-41169 Mönchengladbach (DE)
(74) Vertreter: Werner, Hans-Karsten, Dr.Dipl.-Chem.
(86) Internationale Anmeldenummer: EP9905100
(87) Internationale Veröffentlichungsnummer: WO00004297

(56) Entgegenhaltungen:
- EP-A- 0 779 562
- DE-A- 1 807 331
- DE-A- 2 138 185
- DE-A- 3 029 288
- US-A- 4 038 731
- US-A- 4 576 845
- Römpps Chemie Lexikon, 9. Auflage, Seiten 1425, 3535 und 3536

## Beschreibung

Gegenstand der vorliegenden Erfindung sind Walzen bestehend aus einem Metallkern mit einer Beschichtung aus elastomerem Material und einer Schicht aus Kunststoff sowie Verfahren zur Herstellung derselben.

Die elastomere Beschichtung des Metallkems von Walzen bestehend aus Gummi oder Polyurethan muß von Zeit zur Zeit ersetzt werden. Dazu werden diese Schichten abgebrannt, abgeschält oder abgeschliffen, wobei es gelegentlich auch zu Beschädigungen des Metallkerns kommen kann. Zumindest werden die Schälmesser beschädigt, wenn sie mit dem Metallkern in Berührung kommen.

Aus der DE-A-30 35 117 sind Walzen bekannt, bei denen der Walzenkem nicht aus Metall besteht, sondern aus einem Material, welches durch Pressen eines Gemisches hergestellt ist, das aus einem Kunststoff, Graphit sowie Glasfaser oder Kohlefaser besteht, und das 200° C standhält, ohne sich zu verformen. Diese Walzen weisen ein erheblich geringeres Gewicht auf als herkömmliche Walzen und besitzen darüber hinaus eine bessere Wärmebeständigkeit. In der Figur 3 ist eine Walze dargestellt, die an den Enden noch einen kleinen Metallkern aufweist. Die Hauptlänge des Walzenkerns besteht jedoch aus diesem gehärteten Gemisch.

Aus der DE-C-195 11 153 sind Kalanderwalzen insbesondere für die Papierbehandlung bekannt, die aus einem dünnwandigen Rohr bestehen, auf welchem eine dickere Schicht aus faserverstärktem Kunststoff aufgebracht ist, und welche als äußerste Schicht wiederum eine dünne Schicht aus SiliconKautschuk aufweist. Zur Stabilisierung wird die kohlefaserverstärkte Epoxidschicht durch lange Faserstränge befestigt, die stirnseitig an den Enden des Rohres Umlenkkörper aufweisen. Es handelt sich somit um eine sehr aufwendige Spezialkonstruktion für Kalanderwalzen.

Aus der DE-A-18 07 331 ist bekannt, mit Polyurethan-Gummi beschichtete Metallkerne zunächst mit einer dünnen Schicht von Hartgummi oder mit einer Schicht zu versehen, die aus mit einer wärmehärtenden Harzlösung imprägnierten Fasern durch Aufwickeln auf der Umfangfläche des metallenen Walzenkerns entsteht. Als Fasern werden Glasfasern, Nylonfasern und Polyesterfasern eingesetzt, die in einer Lösung aus wärmehärtendem Kunstharz, wie Epoxyharz, Polyesterharz, Diallylphtalat getränkt sind. Durch diese Zwischenschicht wird zwar die Haftfestigkeit des Polyurethan-Gummis auf dem Metallkern der Walze verbessert und somit das Risiko einer Ablösung im Betrieb vermindert. Auch dieses Verfahren ist aufwendig und führt noch immer nicht zum gewünschten Erfolg.

Die DE-C-30 29 288 beschreibt eine gewisse Verbesserung der Eigenschaften dadurch, daß die Imprägnierung aus dem wärmehärtenden Harz zusätzlich ein feines anorganisches Pulver enthält. Auch derartige Walzen haben sich in der Praxis nicht bewährt. Es werden statt dessen vor allem elastomere Beschichtungen direkt auf den Metallkem aufgebracht, die aufgrund ihrer Zusammensetzung gut auf dem Metall haften. Diese können dann auch problemlos abgebrannt, abgeschält oder abgeschliffen werden, wobei es jedoch gelegentlich zur Beschädigung des Metallkems und/oder der Schälmesser kommt, wenn diese mit dem Metallkern in Berührung kommen.

Die US-A-4038731 beschreibt ein Verfahren, um einen Metallkern mit elastomerem Material zu ummanteln, wobei zwischen dem Kern und der elastomeren Beschichtung ein Klebstoff zur Anwendung kommen soll. Geeignete Klebstoffe sind aufgezählt in Spalte 4, Zeilen 33 bis 53. Als wärmehärtbarer Klebstoff wird dort Formaldehyd Harnstoff (Urea Formaldehyd) genannt. Dieser Klebstoff ist ein Duroplast; vgl. Römpp Chemielexikon, 9. Auflage, Seite 1425.

Die Erfindung hat sich somit die Aufgabe gestellt, die Entfernung verbrauchter Gummi oder Polyurethanschichten vom Metallkem zu vereinfachen und sicherer zu gestalten, insbesondere wenn das Entfernen durch Schälen oder Schleifen erfolgt.

Diese Aufgabe wird gelöst dadurch, daß die Walzen zwischen dem Metallkern und dem elastomeren Material eine Schicht aus Polyharnstoff aufweisen erhältlich aus den Komponenten Isocyanat und einem Diamin.

Insbesondere in der metall-, textil-, holz- sowie der plastik- und papierverarbeitenden Industrie sind die Walzen aggressiven Medien ausgesetzt, die oftmals auch den Metallkern der Walzen angreifen. Die mit Elastomeren beschichteten Materialien der Walzen sind gegen derartige Angriffe geschützt, nicht aber die sonstigen freiliegenden Teile des Metallkerns. Die Erfindung hat sich die weitere Aufgabe gestellt, diese Teile des Metallkerns ebenfalls vor aggressiven Medien zu schützen.

Dies erfolgt erfindungsgemäß dadurch, daß zusätzlich die nicht mit dem elastomeren Material beschichteten freie Metallteile ganz oder teilweise eine Schicht aus dem Polyharnstoff aufweisen.

Derartige Beschichtungen aus dem Polyharnstoff werden vorzugsweise aufgetragen mit Hilfe von Zweikomponenten-Hochdrucksprühmaschinen, wobei die Topfzeit der Gemische kurz eingestellt ist, nämlich im Bereich von nur wenigen Sekunden. Die Verarbeitung derartiger Gemische kann bei Raumtemperatur oder Temperaturen bis ca. 100°C erfolgen. Die dabei entstehenden Schichten sind im allgemeinen bis ca. 150°C stabil und werden von aggressiven Medien nicht oder nur sehr wenig angegriffen. Diese Schichten aus dem Polyharnstoff sind deutlich härter als die elastomeren Schichten auf den Walzen, so daß bei der mechanischen Entfernung durch Schneiden oder Schleifen nur diese elastomeren Schichten entfernt werden.

Sobald diese Werkzeuge auf die Polyhamstoffschicht stoßen, wird kein oder nur sehr wenig Material des Polyharnstoffs entfernt. Schälmesser oder Schleifwerkzeuge werden jedoch nicht beschädigt.

Die Haftfestigkeit der elastomeren Schicht auf der Polyharnstoffschicht ist praktisch die gleiche wie auf der Oberfläche des Metallkerns. Die mechanischen Eigenschaften derartiger Walzen sind praktisch die gleichen wie beim Auftrag der elastomeren Schicht direkt auf den Metallkern. Insbesondere bei einer zusätzlichen Beschichtung der nicht mit dem elastomeren Material beschichteten freie Metallteile des Walzenkerns mit dem Polyharnstoff sind aber auch diese Teile hervorragend gegen aggressive Medien geschützt.

In dem nachfolgenden Beispiel ist die typische Herstellung einer erfindungsgemäßen Walze näher beschrieben.

Ein üblicher Walzenkern aus Stahl wird bei Temperaturen zwischen 80 und 90°C beschichtet mit Hilfe einer Zweikomponenten-Hochdrucksprühmaschine. Die Komponenten sind Isocyanat und ein Diamin. Das Mischungsverhältnis der Komponenten ist ca. 1:1 (Volumen). Die Topfzeit beträgt nur wenige Sekunden. Die Schicht aus dem Polyharnstoff weist Shore Härten im Bereich zwischen 55 und 60 D nach DIN 53505 auf. Auf diese Schicht wird in üblicher Weise die elastomere Schicht aus Gummi oder Polyurethan aufgetragen. Die Eigenschaften der fertigen Walzen entsprechen völlig denen ohne Zwischenschicht aus dem Polyharnstoff. Da auch die freiliegenden Metallteile der Walze mit dem Polyharnstoff beschichtet sind, sind die Gesamtwalzen beständig gegen aggressive Medien, denen die fertigen Walzen normalerweise ausgesetzt sind, beispielsweise in der metall-, textil-, plastik-, holz- oder papierverarbeitenden Industrie.

Die elastomere Schicht läßt sich wie bei herkömmlichen Walzen durch Schälen oder Schleifen entfernen, wobei die härtere Schicht aus dem Polyharnstoff praktisch nicht angegriffen wird, so daß eine Neubeschichtung des Metallkerns mit dem Polyharnstoff nicht oder erst nach sehr häufiger Neubeschichtung mit elastomerem Material nötig ist.

## Patentansprüche

1. Walzen bestehend aus einem Metallkern mit einer Beschichtung aus elastomerem Material und einer Schicht aus Kunststoff zwischen dem Metallkern und dem elastomeren Material, **dadurch gekennzeichnet, daß** die Schicht aus Kunststoff ein Polyharnstoff ist erhältlich aus den Komponenten Isocyanat und einem Diamin.

2. Walzen gemäß Anspruch 1, **dadurch gekennzeichnet, daß** zusätzlich die nicht mit dem elastomeren Material beschichteten freien Metallteile ganz oder teilweise eine Schicht aus Polyharnstoff aufweisen.

3. Verfahren zur Herstellung von Walzen bestehend aus einem Metallkern und einer Beschichtung aus elastomerem Material und einer Schicht aus Kunststoff, **dadurch gekennzeichnet, daß** mindestens die zu beschichtenden Teile des Metallkems zuvor mit einem Polyhamstoff beschichtet werden erhältlich aus den Komponenten Isocyanat und einem Diamin.

## Claims

1. Rollers consisting of a metal core with a coating of an elastomeric material and a layer of plastic between the metal core and the elastomeric material, **characterized in that** said layer of plastic is a polyurea, which polyurea can be obtained from the components isocyanate and a diamine.

2. The rollers according to claim 1, **characterized in that** the exposed metal portions not coated with the elastomeric material additionally bear a layer of polyurea throughout or in part.

3. A method for the preparation of rollers consisting of a metal core and a coating of an elastomeric material and a layer of plastic, **characterized in that** at least the portions to be coated of the metal core are previously coated with a polyurea which can be obtained from the components isocyanate and a diamine.

## Revendications

1. Rouleau, composé d'un noyau métallique, avec un revêtement en matériau élastomère et une couche en matière synthétique entre le noyau métallique et le matériau élastomère, **caractérisé en ce que** la couche en matière synthétique est en un polycarbamide obtenu à partir des composants que sont un isocyanate et une diamine.

2. Rouleau selon la revendication 1, **caractérisé en ce que**, en outre, les parties métalliques découvertes non revêtues du matériau élastomère, présentent, en totalité ou en partie, une couche de polycarbamide.

3. Procédé de fabrication de rouleaux, composés d'un noyau métallique et d'un revêtement en matériau élastomère et d'une couche en matière synthétique, **caractérisé en ce qu'**au moins les parties du noyau métallique à revêtir sont préalablement enduites par un polycarbamide obtenu à partir des composants que sont un isocyanate et une diamine.
